(19) Europäisches Patentamt
European Patent Office
Office européen des brevets

(11) EP 1 679 639 B1

(12) **EUROPEAN PATENT SPECIFICATION**

(45) Date of publication and mention
of the grant of the patent:
**23.07.2008 Bulletin 2008/30**

(51) Int Cl.:
***G06K 9/00*** (2006.01)

(21) Application number: **05077935.4**

(22) Date of filing: **20.12.2005**

(54) **Object classification method for a collision warning system**

Objektklassifizierungsverfahren für ein Kollisionswarnsystem

Procédé de classement d'objet pour un système d'avertissement de collision

(84) Designated Contracting States:
**AT BE BG CH CY CZ DE DK EE ES FI FR GB GR HU IE IS IT LI LT LU LV MC NL PL PT RO SE SI SK TR**

(30) Priority: **10.01.2005 US 32629**

(43) Date of publication of application:
**12.07.2006 Bulletin 2006/28**

(73) Proprietor: **Delphi Technologies, Inc.
Troy, MI 48007 (US)**

(72) Inventors:
• **Zhang, Yan
Kokomo, IN 46902 (US)**
• **Kieselewich, Stephen J.
Camel, IN 46032 (US)**

(74) Representative: **Denton, Michael John et al
Delphi European Headquarters,
64 avenue de la Plaine de France,
Paris Nord II,
B.P. 65059, Tremblay en France
95972 Roissy Charles de Gaulle Cedex (FR)**

(56) References cited:
**US-B1- 6 590 521      US-B1- 6 834 232**

• **MANDAL M K ET AL: "IMAGE INDEXING USING MOMENTS AND WAVELETS" IEEE TRANSACTIONS ON CONSUMER ELECTRONICS, IEEE SERVICE CENTER, NEW YORK, NY, US, vol. 42, no. 3, 1 August 1996 (1996-08-01), pages 557-564, XP000638539 ISSN: 0098-3063**
• **KING I ET AL: "Integrated probability function and its application to content-based image retrieval by relevance feedback" PATTERN RECOGNITION, ELSEVIER, KIDLINGTON, GB, vol. 36, no. 9, September 2003 (2003-09), pages 2177-2186, XP004429561 ISSN: 0031-3203**
• **ZEHANG SUN ET AL: "Improving the performance of on-road vehicle detection by combining gabor and wavelet features" INTELLIGENT TRANSPORTATION SYSTEMS, 2002. PROCEEDINGS. THE IEEE 5TH INTERNATIONAL CONFERENCE ON SEPT. 3-6, 2002, PISCATAWAY, NJ, USA,IEEE, 3 September 2002 (2002-09-03), pages 130-135, XP010608274 ISBN: 0-7803-7389-8**

**Description**

TECHNICAL FIELD

The invention relates to object classification of images from an imaging device and more particularly to an object classification method for a collision warning system.

BACKGROUND OF THE INVENTION

Collision warning has been an active research field due to the increasing complexities of on-road traffic. Generally, collision warning systems have included forward collision warning, blind spot warning, lane departure warning, intersection collision warning, and pedestrian detection. Radar-cued imaging devices for collision warning and mitigation (CWM) systems are of particular interest as they take advantage of both active and passive sensors. On one hand, the range and azimuth information provided by the radar can quickly detect the potential vehicle locations. On the other hand, the extensive information contained in the images can perform effective object classification.

In the prior patent art, US 6590521 classifies an object in a region of interest extracted from an imaged scene by applying an edge detection function to the region of interest and determining if the edge features are characteristic of a vehicle. In literature, Zehang Sun et al. "Improving the performance of on-road vehicle detection by combining gabor and wavelet features" - Intelligent Transportation Systems 2002 Proceedings - describes the uses of wavelets to determine vehicle classification; and Mandal M K et al. "Image indexing using moments and wavelets" - IEEE Transactions on Consumer Electronics vol. 42, no. 3, 1 August 1996; and King I et al. "Integrated probability function and its application to content-based image retrieval by relevance feedback" - Pattern Recognition, Elsevier vol. 36, no. 9, September 2003 - describe the use of orthogonal moment features and wavelets in applications where two images are compared for similarity.

Ahmadian A. et al. "Image Indexing and Retrieval Using Gabor Wavelet and Legendre Moments" - International Conference of the IEEE Engineering in Medicine and Biology 2003 Proceedings - combines the texture extraction capabilities of Gabor wavelets with the shape-description capabilities of Legendre moments. The mix of the two types of features is used to retrieve relevant images from an image database.

Although prior art relating to the field of collision warning systems has demonstrated promising results, there is a need to improve object classification accuracy and system efficiency.

BRIEF DESCRIPTION OF THE DRAWINGS

The present invention, as according to independent claim 1, will now be described, by way of example, with reference to the accompanying drawings, in which:

Figure 1A is a diagram of an object classification method for a collision warning system according to an embodiment;
Figure 1B is a diagram of an object classification method for a collision warning system according to another embodiment;
Figure 2 is a collision warning system image applicable to the method of Figures 1A and 1B;
Figure 3 is a region of interest window of the collision warning system image according to Figures 2;
Figure 4 illustrates the principle of a support vector machine classifier;
Figures 5A-5D are examples of Gabor filters in the spatial domain;
Figures 6A is a vehicle image taken from a region of interest window;
Figure 6B is a Gabor-filtered vehicle image according to Figure 6A;
Figures 6C is a non-vehicle image taken from a region of interest window;
Figure 6D is a Gabor-filtered non-vehicle image according to Figure 6C;
Figures 7A and 7B are examples of classified vehicle images according to the method of Figures 1A and 1B; and
Figures 7C and 7D are examples of classified non-vehicle images according to the method of Figures 1A and 1B.

DESCRIPTION OF THE PREFERRED EMBODIMENT

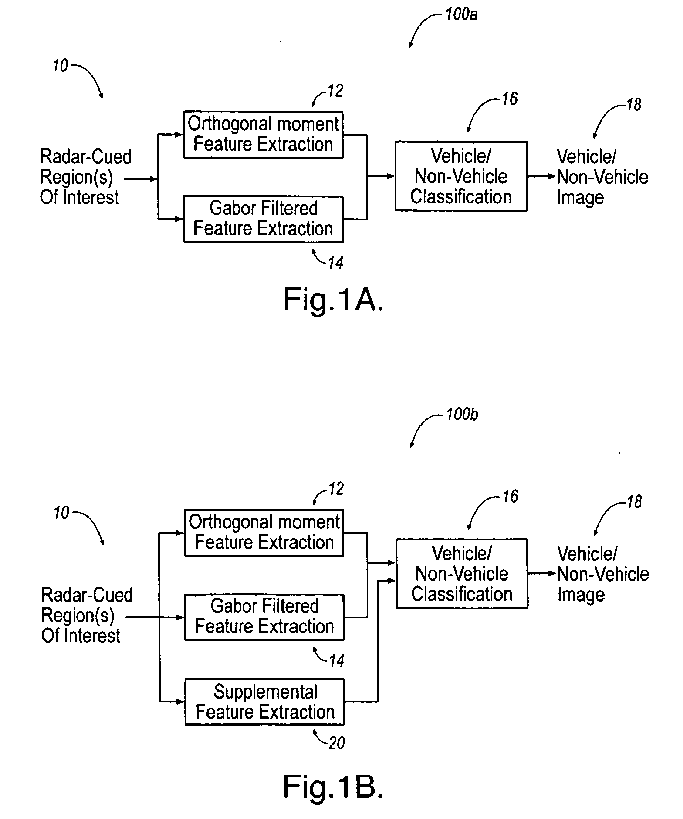

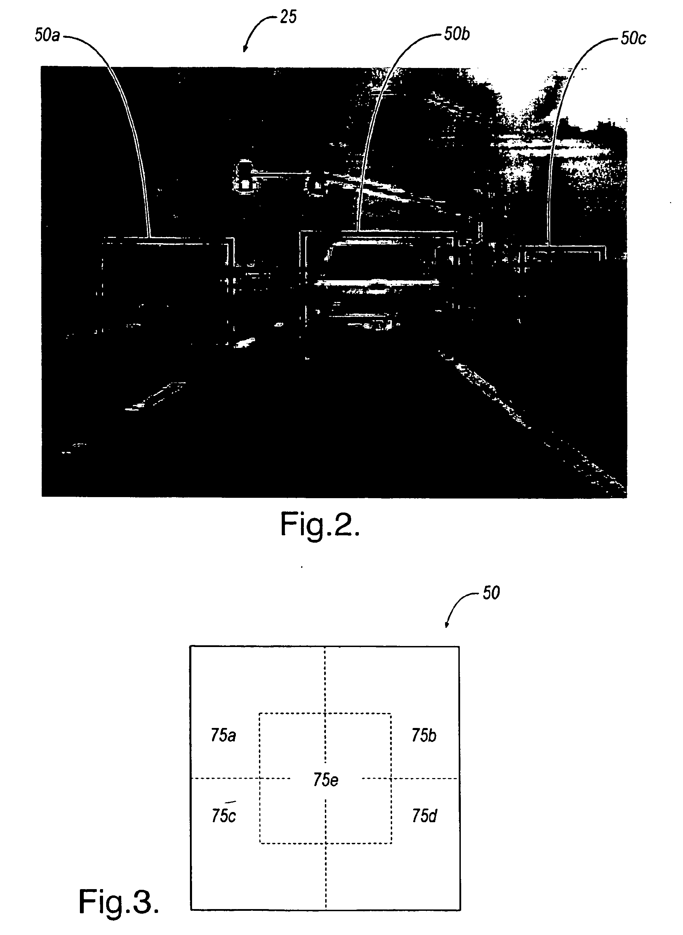

The disadvantages described above are overcome and a number of advantages are realized by an inventive object classification method for a collision warning system, which is shown generally at 100a and 100b in Figures 1A and 1B, respectively. Firstly, at step 10, an imaging device operates in conjunction with a radar to capture potential objects of interest from a video frame 25 (Figure 2), As illustrated in Figure 2, the video frame 25 includes potential objects of interest located in front of a host vehicle where the imaging device is mounted. Pixel features for the objects of interest are extracted by software algorithms at steps 12 and 14 to classify the objects of interest at step 16 into a classified image 18, which is used as an input for a collision warning system. Accordingly, the classified image 18 is input to the collision warning system as a first type of image, such as, for example, a vehicle image, and a second type of image, such as, for example, a non-vehicle image.

According to an embodiment, the imaging device may be a momochrome imaging device. More specifically, the imaging device may be any desirable camera, such as, for example, a charge-coupled-device (CCD) camera, a complementary metal oxide semiconductor (CMOS) camera, or the like. Referring to Figures 2 and 3, potential object of interest locations 50a-50c within the video frame 25 are hereinafter referred to as a region of interest (ROI) window 50. As illustrated in Figure 3, the ROI window 50 may be sub-divided into two or more sub-regions, such as five sub-regions 75a-75e. By dividing the ROI window 50 into sub-regions, the software may look for specific features in a given sub-region to increase the efficiency of the software for discriminating vehicles from non-vehicles in the classification step 16. Although five sub-regions 75a-75e are illustrated in Figure 3, it will be appreciated that the ROI window 50 may be sub-divided into any desirable number of sub-regions in any desirable pattern. For example, although Figure 3 illustrates a central sub-region 75e and left, right, upper, and lower corner sub-regions 75a-75d, the ROI window 50 may be sub-divided into two regions, such as for example, an upper sub-region (i.e. 75a and 75b) and a lower sub-region (i.e. 75c and 75d). Alternatively, the ROI window 50 may be divided into a left-side sub-region (i.e. 75a and 75c) and a right-side sub-region (i.e. 75b and 75d).

At steps 12 and 14, the software extracts orthogonal moment features and Gabor filtered features from the ROI window 50. The features are referenced on a pixel-by-pixel basis of the image in the ROI window 50. Features from the orthogonal moments may be evaluated from the first order (i.e. mean), the second order (i.e. variance), the third order (i.e. skewness), the fourth order (i.e. kurtosis) and up to the $6^{th}$-order. It will be appreciated that features from orders higher than the $6^{th}$ order may be extracted, however, as the order increases, the moments tend to represent the noise in the image, which may degrade overall performance of the feature extraction at step 12. As explained in the following description, features of the Gabor filtered images are extracted in two scales (i.e. resolution) and four directions (i.e. angle). However, it will be appreciated that any desirable number of scales and directions may be applied in an alternative embodiment.

At step 16, the extracted orthogonal moment and Gabor filtered features of the ROI window 50 are input to an image classifier, such as, for example, a support vector machine (SVM) or a neural network (NN), which determines if the image from the ROI window 50 is a vehicle image or a non-vehicle image 18. According to an embodiment, when the extracted orthogonal moment and Gabor filtered features are input to the classifier at step 16, both sets of features from steps 12 and 14 are concatenated in a merging of the feature coefficients.

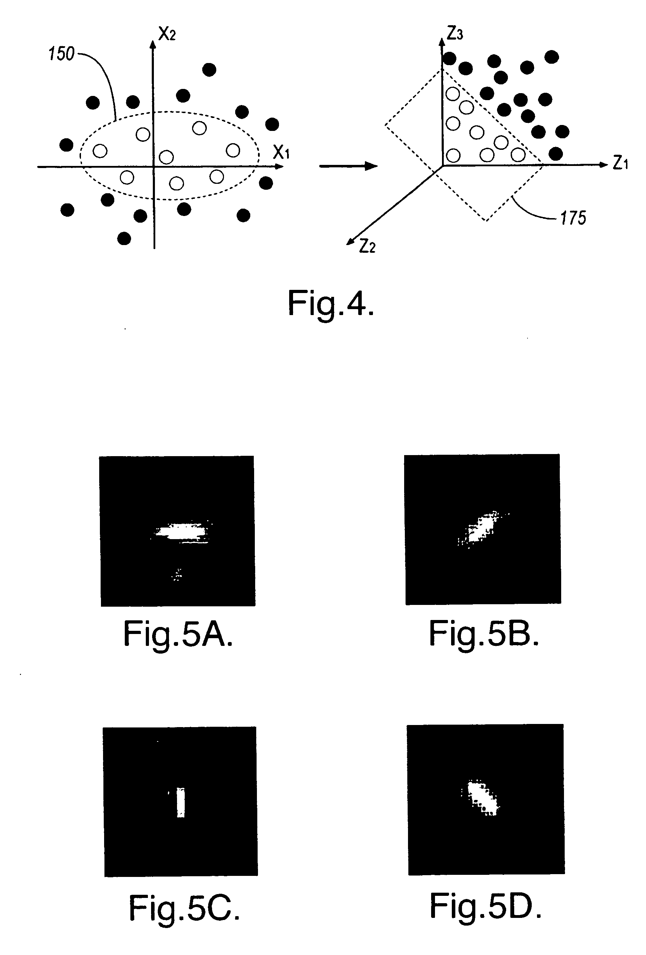

Referring to Figure 4, an SVM classifier, as known in the art, turns a complicated nonlinear decision boundary 150 into a simpler linear hyperplane 175. The SVM shown in Figure 4 operates on the principle where a monomial function maps image samples in the input two-dimensional feature space (i.e., $x_1$, $x_2$) to three dimensional feature space (i.e., $z_1$, $z_2$, $z_3$) via a mapping function $( x_1^2, \sqrt{2}x_1x_2, x_2^2)$. Accordingly, SVMs map training data in the input space nonlinearly into a higher-dimensional feature space via the mapping function to construct the separating hyperplane 175 with a maximum margin. The kernal function, K, integrates the mapping and the computation of the hyperplane 175 into one step, and avoids explicitly deriving the mapping function. Although different kernals lead to different learning machines, they tend to yield similar performance and largely overlapping support vectors. A Gaussian Radial Basis Function (RBF) kernal may be chosen due to its simple parameter selection and high performance.

As an alternative to the SVM, the NN classifier may be applied at step 16. The NN classifier is a standard feed-forward, fully interconnected back-propagation (FBNN) having hidden layers. It has been found that a fully-interconnected FBNN with carefully chosen control parameters provides the best performance. An FBNN generally consists of multiple layers, including an input layer, one or more hidden layers, and an output layer. Each layer consists of a varying number of individual neurons, where each neuron in any layer is connected to every neuron in the succeeding layer. Associated with each neuron is a function which is variously called an activation function or a transfer function. For a neuron in any layer but the output layer, this function is a nonlinear function which serves to limit the output of the neuron to a narrow range (i.e. typically 0 to 1 or -1 to 1). The function associated with a neuron in the output layer may be a nonlinear function of the type just described, or a linear function which allows the neuron to produce all values.

In an FBNN, there are three steps that occur during training. In the first step, a specific set of inputs are applied to the input layer, and the outputs from the activated neurons are propagated forward to the output layer. In the second step, the error at the output layer is calculated and a gradient descent method is used to propagate this error backward to each neuron in each of the hidden layers. In the final step, the propagated errors are used to re-compute the weights associated with the network connections in the first hidden layer and second hidden layer.

When applied to the method shown in Figures 1A and 1B, an NN according to an embodiment, may include two hidden layers having 90 processing elements in the first hidden layer and 45 processing elements in the second hidden layer. It will be appreciated that the number of processing elements in each hidden layer is best selected by a trial-and-error process and these numbers may vary. It will also be appreciated that NNs and SVMs represent two possible methods to be used for image classification in image classification at step 16 (e.g., decision trees, may be used in the alternative). If desired, the classification at step 16 may include more than one classifier, such as, for example, an NN and SVM. If multiple classifiers are arrayed in such a manner, an ROI window 50 input to the classification step 16 may be processed by each classifier to increase the probability of a correct classification of the object in the ROI window 50.

Referring back to Figures 1A and 1B, orthogonal moment feature extraction is preferred at step 12 in terms of information redundancy and representation abilities as compared to other types of moments. Orthogonal moments provide fundamental geometric properties such as area, centroid, moments of inertia, skewness, and kurtosis of a distribution. According to an embodiment of the invention, Legendre or Zernike orthogonal moment features may be extracted at step 12. In operation, orthogonal Legendre moments may be preferred over Zernike moments due to their favorable computational costs (i.e. computation time delay, amount of memory, speed of processor, etc.) and the comparable representation ability. More specifically, orthogonal Zernike moments have slightly less reconstruction error than orthogonal Legendre moments.

Legendre polynomials form a complete orthogonal basis set on the interval [-1,1]. The orthogonal Legendre moment features can be calculated in Equation 1 as follows, where 'm' and 'n' represent the order:

$$\lambda_{mn} = \frac{(2m+1)(2n+1)}{N^2} \sum_{i=0}^{N-1} \sum_{j=0}^{N-1} P_m(x) P_n(y) f(i,j). \qquad (1)$$

Legendre moments are computed for the entire, original ROI window 50, or alternatively, for the sub-regions 75a-75e. When evaluated by the classifier in step 16, the 6th-order orthogonal Legendre moment for the ROI window 50 includes 28 extracted moment values (i.e. 28 orthogonal Legendre features), whereas, when the ROI window 50 is sub-divided into five sub-regions 75a-75e, the classifier evaluates 140 extracted moment values (i.e. 28 features x 5 sub-regions).

When image features are extracted in step 14, the Gabor filter acts as a local band-pass filter with certain optimal joint localization properties in both the spatial and the spatial frequency domain. A two-dimensional Gabor filter function is defined as a Gaussian function modulated by an oriented complex sinusoidal signal. More specifically, a two-dimensional Gabor filter g(x,y) is defined in Equation 2, where 'x' and 'y' represent direction, 'σ' represents scale, and 'W' represents cut-off frequency. The Fourier transform of Equation 2, G(u,v), is defined in Equation 3 as follows:

$$g(x,y) = \frac{1}{2\pi\sigma_x\sigma_y} \exp\left[-\frac{1}{2}\left(\frac{x'^2}{\sigma_x^2} + \frac{y'^2}{\sigma_y^2}\right)\right] \exp[j2\pi W x'] \qquad (2)$$

$$G(u,v) = \exp\left[-\frac{1}{2}\left(\frac{(u-W)^2}{\sigma_u^2} + \frac{v^2}{\sigma_v^2}\right)\right]. \qquad (3)$$

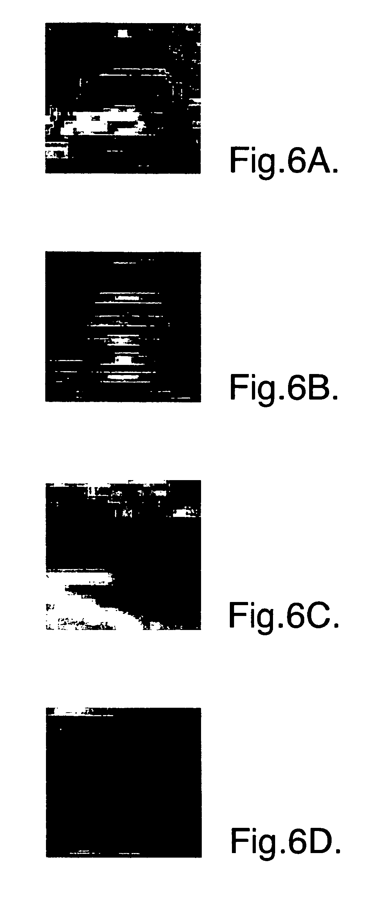

Referring to Figures 5A-5D, Gabor filters in the spatial domain are shown in 40x40 grayscale images. Figure 5A has a 0° orientation, Figure 5B has a 45° orientation, Figure 5C has a 90° orientation, and Figure 5D has a 135° orientation. If a multi-scale Gabor filter is provided, the Gabor filter may capture image characteristics in multiple resolutions. Accordingly, the method in Figures 1A and 1B apply a two-scale, three-by-three and six-by-six Gabor filter set. Additionally, the orientation of each Gabor filter described above helps discriminate ROI windows 50 that may or may not have horizontal and vertical parameters. For example, Figures 6B and 6D illustrate examples of Gabor filtered vehicle and non-vehicle images from Figures 6A and 6C, respectively, which provide a good representation of directional image details to distinguish vehicles from non-vehicles. Thus, the filtered vehicle image in Figure 6B tends to have more horizontal and vertical features than the filtered non-vehicle image in Figure 6D, which tends to have more diagonal image features.

According to an embodiment, the magnitude of the two-scale Gabor filtered ROI window 50 includes three types of texture metric features. The three types of texture metric features include mean, standard deviation, and skewness, which are calculated by the software. For a given 40x40 image, nine overlapping 20x20 sub-regions are obtained to provide a set of 216 Gabor features (i.e. two scales x four directions x three texture metrics x nine overlapping 20x20 sub-regions) for each ROI window 50.

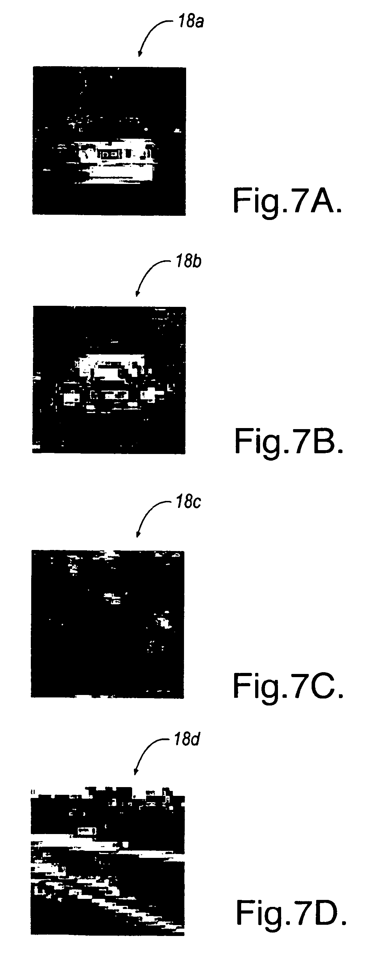

Referring to Figures 7A-7D, classified images 18a-18d of the method 100a are shown according to an embodiment. Classified vehicle images may include cars, small trucks, large trucks, and the like. Such classified vehicle images may encompass a wide range of vehicles in terms of size and color up to approximately seventy meters away under various weather conditions. Classified non-vehicle images, on the other hand, may include road signs, trees, vegetations, bridges, traffic lights, traffic barriers, and the like. As illustrated, the classified image 18a is a vehicle in daylight, the classified image 18b is a vehicle in the rain, the classified image 18c is a traffic light, and the classified image 18d is a traffic barrier.

For comparison in determining the most efficient analysis of the method as illustrated in 100a, orthogonal Legendre moments computed for the entire ROI 50 are referred to as "Legendre A Features," and Legendre moments computed for the five sub-regions 75a-75e in an ROI window 50 are referred to as "Legendre B Features." In the comparison, five data sets were tabulated. The data sets include Legendre A Features, Legendre B Features, Gabor Features, and a combination of the Legendre A Features with the Gabor Features and a combination of the Legendre B Features with the Gabor Features. The combination of Legendre and Gabor Features was carried out by a merging of the feature coefficients.

The offline testing sample data set consisted of 6482 images, which included 2269 for vehicles and 4213 for non-vehicles. The data was randomly split into 4500 images, approximately 69.4% of which was used for training and the remaining 1982 images of which were used for testing. To evaluate the classification performance, four metrics were defined to include (i) true positive (TP) as the probability of a vehicle classified as a vehicle, (ii) true negative (TN) as the probability of a non-vehicle classified as a non-vehicle, (iii) false positive/alarm (FP) as the probability of a non-vehicle classified as a vehicle, and (iv) false negative (FN) as the probability of a vehicle classified as a non-vehicle. These metrics are defined using the results of classifying the images from the test set. Table 1 summarizes the classification performances as follows:

**Table 1**

| Feature | TP (%) | TN (%) | FP (%) | FN (%) |
|---|---|---|---|---|
| Legendre A | 92.08 | 98.40 | 1.60 | 7.92 |
| Legendre B | 97.76 | 96.12 | 3.88 | 2.24 |
| Gabor | 93.12 | 98.78 | 1.22 | 6.88 |
| Legendre A & Gabor | 99.10 | 98.10 | 1.90 | 0.90 |
| Legendre B & Gabor | 97.16 | 99.62 | 0.38 | 2.84 |

As illustrated in Table 1, orthogonal Legendre B moments including the sub-regions 75a-75e yield significantly higher true positive (i.e., 97.76% vs. 92.08%) and slightly lower true negative (i.e., 96.12% vs. 98.4%) than orthogonal Legendre A moments, which includes only the ROI window 50 on its own without any sub-division of the window. Gabor features yield similar, but slightly better performance in comparison to the Legendre A features regarding all four metrics.

However, the merging of the Legendre moments and the Gabor features yields significantly better performance than either of the Legendre A, B, or Gabor features on its own. For instance, the merging of Gabor features and Legendre A moments yields the true positive as 99.1% and the true negative as 98.1 %. The fusion of Gabor features and Legendre B moments shows a similar trend as the true positive of 97.16% and the true negative of 99.62%. Thus, a preferred embodiment may include a method that merges Gabor features with Legendre A moments (i.e, 28 features from a 40x40 image rather than 140 features from a 40x40 image) due to its high performance as indicated by the table and the smaller number of features in comparison to Legendre B feature (i.e. 140 features).

In alternative embodiment illustrated in Figure 1B, a method 100b incorporating supplemental image feature extraction of the ROI window 50 at step 20 may be included as an input to the classifier at step 16. For example, supplemental feature extraction may include, but is not limited to, edge features and Haar wavelets. Haar wavelet features, for example, may be generated at four scales and three directions, which results in 2109 features extracted from a given ROI window 50.

Table 2 summarizes a similar testing procedure described above in which the classification performance comparison used Haar wavelets with an NN classifier. In this test, the proposed merging of the Legendre and Gabor features outperform the Haar wavelets. However, it will be appreciated that other supplemental image features from step 20, as an alternative to Haar wavelets, may return results that outperform the combination of the Legendre and Gabor features. Although not shown in the table, the supplemental feature extraction may also include a second set of orthogonal moment features, such as, for example, orthogonal Zernike moment features.

**Table 2**

| Feature | TP (%) | TN (%) | FP (%) | FN (%) |
|---|---|---|---|---|
| **Legendre A & Gabor** | 94.90 | 99.28 | 0.72 | 5.10 |
| **Legendre B &Gabor** | 95.81 | 99.39 | 0.61 | 4.19 |
| **Haar wavelets** | 93.68 | 98.49 | 1.51 | 6.32 |

Thus, a merging of orthogonal Legendre moments and Gabor features show improved efficiency for vehicle recognition over conventional collision warning systems. The orthogonal Legendre moments may be computed globally from an entire ROI window 50, or locally from divided sub-regions 75a-75e while considering statistical texture metrics including the mean, the standard deviation, and the skewness from two scale and four direction Gabor filtered images. Moreover, alternative arrangements may be provided that permit the classifier to consider supplemental feature extraction in addition to the combination of the orthogonal Legendre features and Gabor features.

**Claims**

1. A method of classifying an object imaged in a video frame (25) by an imaging device, where a region of interest (50) in the video frame (25) corresponding to a potential location of the object is captured by radar-cuing and then examined, the method comprising the steps of:

   extracting (12) orthogonal moment features from the region of interest (50);
   extracting (14) Gabor filtered features from the region of interest (50);
   merging the extracted orthogonal moment features and Gabor filtered features; and
   classifying (16) the region of interest (50) as vehicle or non-vehicle based on the merged features.

2. The method of claim 1, including the steps of:

   sub-dividing the region of interest (50) into sub-regions (75a-75e); and
   extracting (12) orthogonal moment features from each of the sub-regions (75a-75e).

3. The method of claim 1, where the orthogonal moment features are orthogonal Legendre moment features.

4. The method of claim 1, where the orthogonal moment features are orthogonal Zemike moment features.

5. The method of claim 1, where:

   the Gabor filtered features include two scales and four directions defined by a 0°, a 45°, a 90°, and a 135° orientation.

6. The method of claim 5, where:

   the Gabor filtered features include nine overlapping 20x20 pixel sub-regions and three texture metrics including mean, standard deviation, and skewness.

7. The method of claim 1, including the steps of:

   extracting (20) supplemental features from the region of interest (50);
   merging the extracted orthogonal moment features, Gabor filtered features and supplemental features; and
   classifying (16) the region of interest (50) as vehicle or non-vehicle based on the merged features.

8. The method of claim 7, where:

   the extracted supplemental features include Haar wavelets.

**9.** The method of claim 7, where:

the extracted supplemental features include edge features.

**10.** The method of claim 7, where:

the extracted supplemental features include Zemike moments.

**Patentansprüche**

**1.** Verfahren zur Klassifizierung eines in einem Videobild (25) durch ein Bildverarbeitungsgerät erfasstes Objekt, wobei ein Bildbereich (Region ofInterest) (50) im Videobild (25), der einem potenziellen Standort des Objekts entspricht, durch Radarvoreinweisung erfasst und dann untersucht wird, wobei das Verfahren folgende Schritte umfasst:

Extrahieren (12) von orthogonalen Momentmerkmalen des Bildbereichs (50);
Extrahieren (14) von Gabor-gefilterten Merkmalen des Bildbereichs (50);
Kombinieren der extrahierten orthogonalen Momentmerkmale und der Gabor-gefilterten Merkmale; sowie
Klassifizieren (16) des Bildbereichs (50) als zum Fahrzeug oder nicht zu Fahrzeug gehörend, basierend auf den kombinierten Merkmalen.

**2.** Verfahren nach Anspruch 1, die Schritte umfassend:

Unterteilen des Bildbereichs (50) in Unterbereiche (75a-75e); sowie Extrahieren (12) von orthogonalen Momentmerkmalen aus jedem der Unterbereiche (75a-75e).

**3.** Verfahren nach Anspruch 1, wobei die orthogonalen Momentmerkmale orthogonale Legendre-Momentmerkmale sind.

**4.** Verfahren nach Anspruch 1, wobei die orthogonalen Momentmerkmale orthogonale Zernike-Momentmerkmale sind.

**5.** Verfahren nach Anspruch 1, wobei:

Die Gabor-gefilterten Merkmale zwei Skalen und vier durch eine Orientierung von 0°, 45°, 90° und 135° definierte Richtungen umfassen.

**6.** Verfahren nach Anspruch 5, wobei:

Die Gabor-gefilterten Merkmale neun überlappende 20 mal 20 Pixel große Unterbereiche sowie drei Texturmetriken einschließlich Mittelwert, Standardabweichung und Schiefe umfassen.

**7.** Verfahren nach Anspruch 1, die Schritte umfassend:

Extrahieren (20) von Zusatzmerkmalen aus dem Bildbereich (50);
Kombinieren der extrahierten orthogonalen Momentmerkmale, Gabor-gefilterten Merkmale und Zusatzmerkmale; sowie
Klassifizieren (16) des Bildbereichs (50) als zum Fahrzeug oder nicht zu Fahrzeug gehörend, basierend auf den kombinierten Merkmalen.

**8.** Verfahren nach Anspruch 7, wobei:

die extrahierten Zusatzmerkmale Haar-Wavelets umfassen.

**9.** Verfahren nach Anspruch 7, wobei:

die extrahierten Zusatzmerkmale Kantenmerkmale umfassen.

**10.** Verfahren nach Anspruch 7, wobei:

die extrahierten Zusatzmerkmale Zernike-Merkmale umfassen.

**Revendications**

1. Procédé pour classer un objet dans l'image se trouve dans une trame vidéo (25) prise par un appareil d'imagerie, dans lequel une région d'intérêt (50) dans la trame vidéo (25) correspondant à un emplacement potentiel de l'objet est capturée par repérage radar puis examiné, le procédé comprenant les étapes consistant à :

   extraire (12) des caractéristiques de moment orthogonal depuis la région d'intérêt (50) ;
   extraire (14) des caractéristiques filtrées au filtre de Gabor depuis la région d'intérêt (50) ;
   fusionner les caractéristiques de moment orthogonal et les caractéristiques filtrées au filtre de Gabor extraites ; et
   classer (16) la région d'intérêt (50) comme étant un véhicule ou un non-véhicule en se basant sur les caractéristiques fusionnées.

2. Procédé selon la revendication 1, incluant les étapes consistant à :

   subdiviser la région d'intérêt (50) en sous-régions (75a - 75e) ; et
   extraire (12) des caractéristiques de moment orthogonal depuis chacune des sous-régions (75a - 75e).

3. Procédé selon la revendication 1, dans lequel les caractéristiques de moment orthogonal sont des caractéristiques de moment orthogonal de Legendre.

4. Procédé selon la revendication 1, dans lequel les caractéristiques de moment orthogonal sont des caractéristiques de moment orthogonal de Zernike.

5. Procédé selon la revendication 1, dans lequel :

   les caractéristiques filtrées au filtre de Gabor incluent deux échelles et quatre directions définies par une orientation à 0°, à 45°, à 90° et à 135°.

6. Procédé selon la revendication 5, dans lequel :

   les caractéristiques filtrées au filtre de Gabor incluent neuf sous-régions en chevauchement de 20 * 20 pixels et trois mesures concernant la texture, qui inclut la déviation moyenne, la déviation standard et la dissymétrie.

7. Procédé selon la revendication 1, incluant les étapes consistant à :

   extraire (20) des caractéristiques supplémentaires depuis la région d'intérêt (50) ;
   fusionner les caractéristiques de moment orthogonal, les caractéristiques filtrées au filtre de Gabor, et les caractéristiques supplémentaires extraites ; et
   classer (16) la région d'intérêt (50) comme étant un véhicule ou un non-véhicule en se basant sur les caractéristiques fusionnées.

8. Procédé selon la revendication 7, dans lequel :

   les caractéristiques supplémentaires extraites incluent les ondelettes de Haar.

9. Procédé selon la revendication 7, dans lequel :

   les caractéristiques supplémentaires extraites incluent des caractéristiques de bordure.

10. Procédé selon la revendication 7, dans lequel :

   les caractéristiques supplémentaires extraites incluent des moments de Zernike.

Fig.1A.

Fig.1B.

Fig.2.

Fig.3.

Fig.4.

Fig.5A.

Fig.5B.

Fig.5C.

Fig.5D.

Fig.6A.

Fig.6B.

Fig.6C.

Fig.6D.

18a

Fig.7A.

18b

Fig.7B.

18c

Fig.7C.

18d

Fig.7D.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6590521 B

### Non-patent literature cited in the description

- **ZEHANG SUN et al.** Improving the performance of on-road vehicle detection by combining gabor and wavelet features. *Intelligent Transportation Systems 2002 Proceedings - describes the uses of wavelets to determine vehicle classification*
- **MANDAL M K et al.** Image indexing using moments and wavelets. *IEEE Transactions on Consumer Electronics,* 01 August 1996, vol. 42 (3
- Integrated probability function and its application to content-based image retrieval by relevance feedback. **KING I et al.** Pattern Recognition. Elsevier, September 2003, vol. 36
- **AHMADIAN A. et al.** Image Indexing and Retrieval Using Gabor Wavelet and Legendre Moments. *International Conference of the IEEE Engineering in Medicine and Biology 2003 Proceedings - combines the texture extraction capabilities of Gabor wavelets with the shape-description capabilities of Legendre moments*